# EUROPEAN PATENT APPLICATION

(11) **EP 0 632 640 A1**
(43) Date of publication of application: **04.01.1995**
(21) Application number: 94108151.5
(22) Date of filing: 26.05.1994
(51) Int. Cl.: H04N 1/32

(54) **Communication apparatus**

(30) Priority: 28.05.1993 JP 151223/93
(71) Applicant: CANON KABUSHIKI KAISHA, Tokyo (JP)
(72) Inventor: Okada, Masaaki, c/o Canon Kabushiki Kaisha, Tokyo 146 (JP); Ohtani, Atsushi, c/o Canon Kabushiki Kaisha, Tokyo 146 (JP)
(74) Representative: Pellmann, Hans-Bernd, Dipl.-Ing.

(57) **Abstract**

A communication apparatus which is connected to a telephone line together with a telephone comprises a connection unit to connect the telephone, a detect unit to detect a connecting state of the telephone, and a connection unit to selectively connect a load such as call signal detector or terminal circuit to the telephone line in accordance with the detection by the detect unit. The detect unit detects an off hook of the telephone or detects whether the telephone is connected to the connection unit or not.

## Description

### BACKGROUND OF THE INVENTION

### Field of the Invention

The invention relates to a communication apparatus which is connected to a line together with a telephone.

### Related Background Art

Hitherto, in case of generating a call by a pulse dial from a telephone connected to a facsimile apparatus, a pulse waveform passes through the inside of the facsimile apparatus and passes in a telephone line and is transmitted to a switchboard.

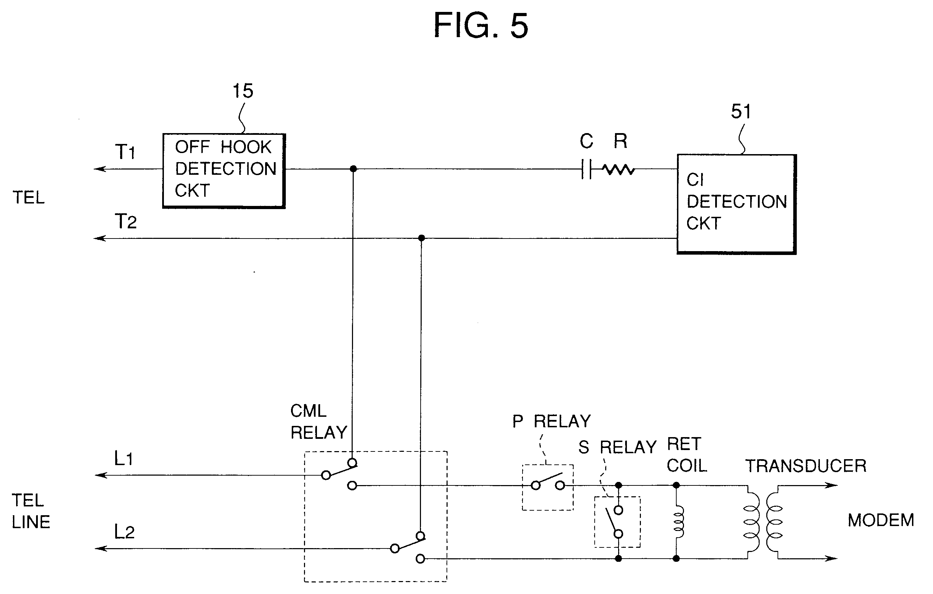

Fig. 5 is a circuit diagram showing a construction of a peripheral circuit of a network control section in the conventional facsimile apparatus. Only the items regarding the conventional subject will now be described here.

As shown in the diagram, a CI detection circuit 51 to detect a CI signal is provided in the facsimile apparatus.

In case of providing the CI detection circuit 51 as shown in Fig. 5, however, there is a drawback such that a pulse waveform is deformed because the CI detection circuit 51 is connected in parallel to the telephone line in which the pulse waveform passes. That is, in Fig. 5, a capacitor C and a resistor R for providing an impedance in an on hook state are provided to the facsimile apparatus. The capacitor C and resistor R are connected in series to the CI detection circuit 51 and act on the pulse waveform.

In the conventional facsimile apparatus, therefore, there is a fear such that a dial signal is erroneously judged in the switchboard due to a waveform distortion of the pulse dial.

### SUMMARY OF THE INVENTION

It is an object of the invention to provide a communication apparatus of a high reliability.

Another object of the invention is to prevent an erroneous operation of a switchboard.

Still another object of the invention is to prevent a deformation of a waveform of a dial pulse.

The above and other objects and features of the present invention will become apparent from the following detailed description and the appended claims with reference to the accompanying drawings.

### BRIEF DESCRIPTION OF THE DRAWINGS

Fig. 1 is a block diagram showing the first embodiment of the invention;
Fig. 2 is a circuit diagram showing a peripheral circuit of a network control section in the first embodiment;
Fig. 3 is a time chart showing control signals from a CPU for a series of operations of an H relay in the first embodiment;
Fig. 4 is a circuit diagram showing a peripheral circuit of a network control section in the second embodiment of the invention;
Fig. 5 is a circuit diagram showing a peripheral circuit of a network control section in a conventional apparatus;
Fig. 6 is a block diagram showing a peripheral circuit of a network control section in the third embodiment of the invention; and
Fig. 7 is a block diagram showing a peripheral circuit of a network control section in the fourth embodiment of the invention.

### DETAILED DESCRIPTION OF THE PREFERRED EMBODIMENTS

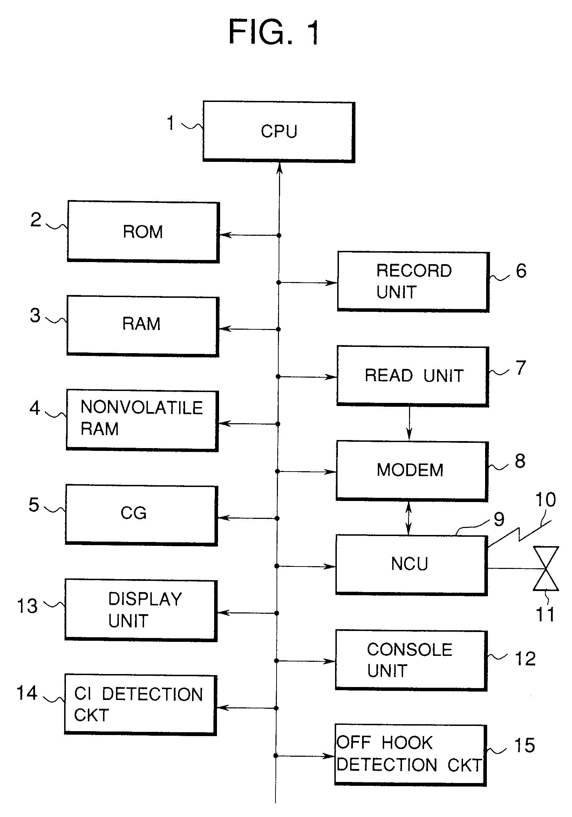

Fig. 1 is a block diagram showing a whole construction of a facsimile apparatus in the first embodiment of the invention.

A CPU 1 is constructed by a microprocessor or the like and controls the whole facsimile apparatus in accordance with a program stored in an ROM 2.

An RAM 3 stores binary image data which was read by a read unit 7 and a signal which was input from a telephone line 10 through an NCU 9 and was demodulated by a modem 8 as binary data.

A nonvolatile RAM 4 certainly stores the data to be preserved even in a state in which a power source of the facsimile apparatus is shut off.

A CG 5 denotes an ROM to store characters based on the JIS code, ASCII code, or the like.

A record unit 6 records and generates the recording data stored in the RAM 3 as a hard copy.

The read unit 7 binarizes the data which was read by using a CCD and sequentially sends the binary data to the RAM 3. A filling state of the original image for the read unit 7 can be detected by an original sensor. An original detection signal of the original sensor is sent to the CPU 1.

The modem 8 modulates the transmission data stored in the RAM 3 on the basis of the control of the CPU 1 and supplies to the telephone line 10 through the NCU 9. The modem 8, further, receives the analog signal which is input from the telephone line 10 through the NCU 9 and demodulates it and stores the binary data into the RAM 3.

The NCU 9 switches the telephone line 10 to either one of the modem 8 and a telephone 11 and connects by the control of the CPU 1.

The telephone 11 comprises a handset, a speech network, a dialer, and the like.

A console unit 12 is constructed by; a key to start the image transmission, reception, or the like;
a mode selection key to designate an operating mode such as fine, standard, automatic reception, or the like upon transmission or reception; a ten-key for dialing; and the like. The CPU 1 detects depression states of those keys and controls each of the above units in accordance with those states.

A display unit 13 is a liquid crystal display to display 16 digits and displays predetermined characters or the like by the control of the CPU 1.

In the case where a certain specified CI (call) signal is input, a CI detection circuit 14 informs the input of the CI signal to the CPU 1. In an automatic switching mode between the facsimile apparatus and the telephone 11, if the CI signal is detected, the CPU 1 sets the facsimile apparatus main body into a receiving mode when the call generating side is set to the facsimile. When the call generating side is set to the telephone, the CPU 1 rings a pseudo bell sound of the facsimile main body.

When the telephone connected to the facsimile apparatus is set into an off hook state, an off hook detection circuit 15 detects it and informs such a state to the CPU 1.

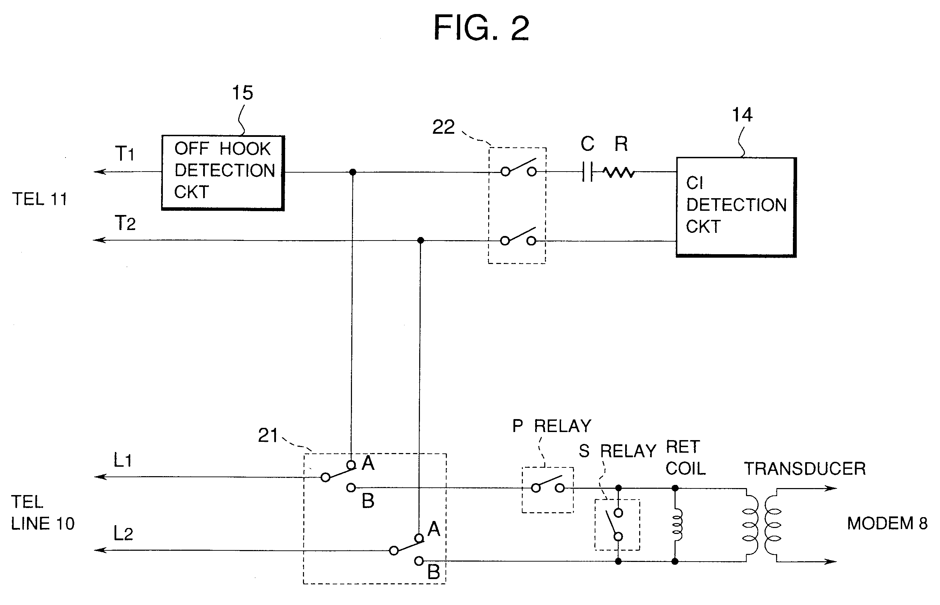

Fig. 2 is a circuit diagram showing a construction of a peripheral circuit of a network control section in the first embodiment.

In the case where a pulse dial call is generated from a telephone connected to the facsimile apparatus, the above circuit prevents the occurrence of a waveform distortion when the pulse waveform passes through the inside of the facsimile apparatus and exists to the telephone line.

A CML relay 21 is located at a contact A in a standby state. When the telephone 11 is used, the CML relay 21 is held at this position. In case of performing a transmission or reception, the CML relay is switched to a contact B.

When the telephone 11 is set into an off hook state, an H relay 22 disconnects the CI detection circuit 14 and the capacitor C and resistor R which are connected in series to the CI detection circuit 14. Due to this, the pulse waveform from the telephone 11 is not influenced by the CI detection circuit 14 and the capacitor C and resistor R.

The contact of the H relay 22 is ordinarily not connected. Only when connecting the contact, the CPU 1 supplies a current to a coil in the relay.

In the standby state, therefore, the CI detection circuit 14 must be connected to the telephone circuit 10. Therefore, at a time point when the power source of the facsimile apparatus is turned on, the CPU 1 supplies a current to the coil of the H relay 22, thereby connecting the contact.

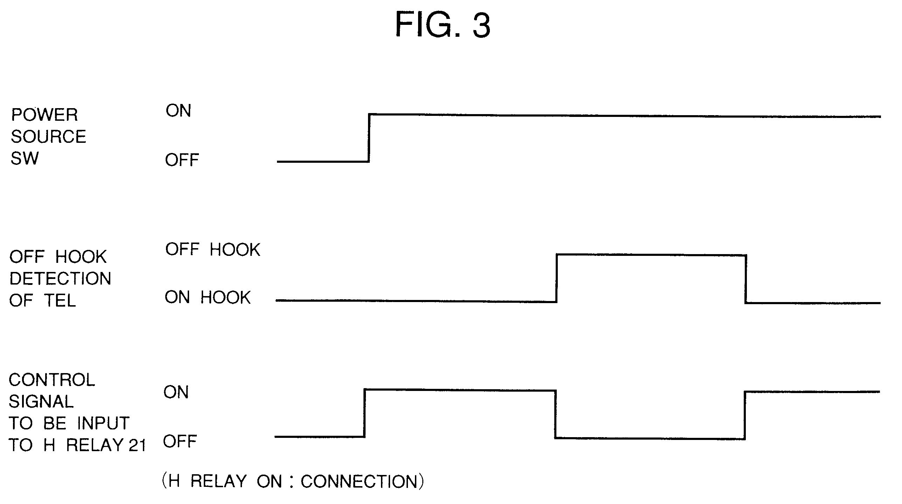

Fig. 3 is a time chart showing control signals from the CPU 1 for a series of operations of the H relay 22.

In case of using the telephone 11 at the time of power failure as well, the CI detection circuit 14 and the capacitor C and resistor R which are connected in series to the CI detection circuit 14 also must be disconnected so as not to deform the dial pulse waveform. Therefore, when the power source of the facsimile apparatus is OFF, the CI detection circuit 14 and the capacitor C and resistor R must be disconnected by the H relay 22.

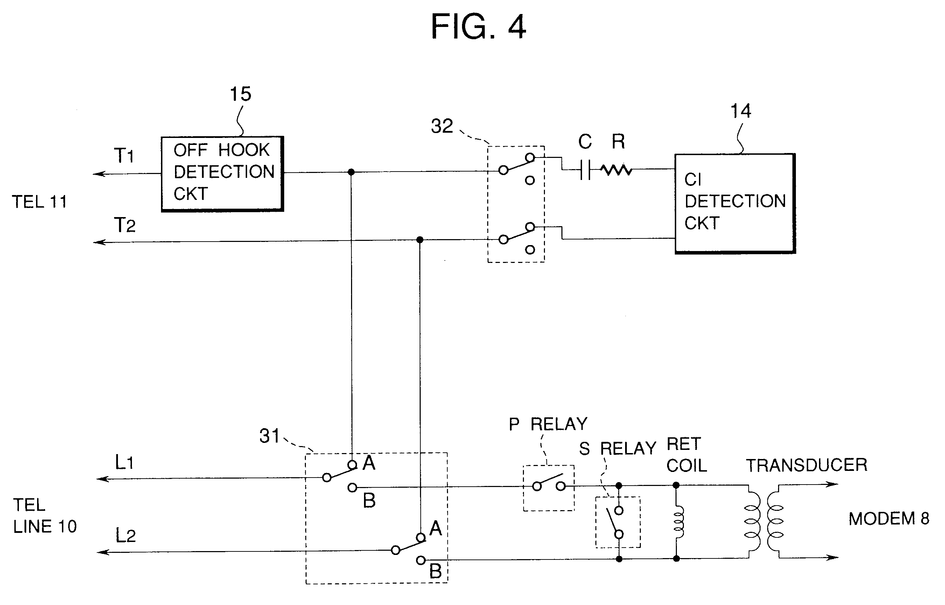

Fig. 4 is a circuit diagram showing a construction in case of considering the reduction of an electric power consumption as a second embodiment of the invention.

In a manner similar to a CML relay 31, an H relay 32 is ordinarily connected to either one of the contacts A and B. In the standby state, the H relay 32 connects the CI detection circuit 14. When the telephone 11 is set to an off hook state, the H relay 32 disconnects the CI detection circuit 14.

By such a construction, there is no need to supply a current to the H relay 32 in the standby state and the electric power consumption can be reduced.

The third embodiment of the invention will now be described.

According to the third embodiment, an impedance of the CI detection circuit is raised, a terminal circuit of a low impedance is provided, and the terminal circuit is controlled in a manner such-that the terminal circuit is not inserted when the telephone is used and that the terminal circuit is inserted when the telephone is not used, thereby preventing a distortion of the dial pulse waveform.

The impedance of the CI detection circuit is set to a value such that the waveform of the dial pulse is not deformed. The impedance of the terminal circuit is set to a value such that it is judged that the apparatus is connected by the switchboard.

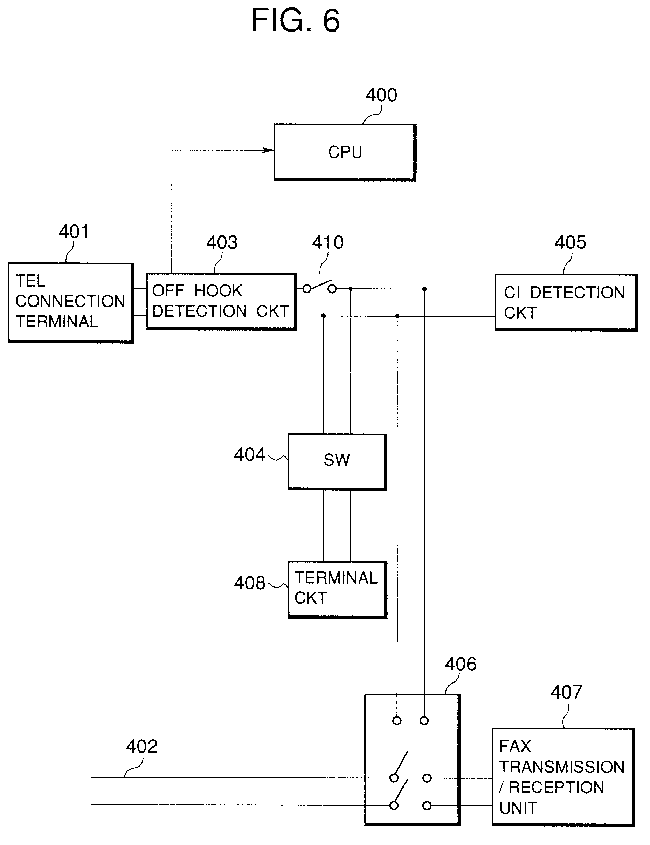

Fig. 6 is a block diagram showing a construction of a peripheral circuit of a network control section in the third embodiment. The third embodiment comprises: a CPU 400; a telephone connection terminal 401; a public line 402; an off hook detection circuit 403; a switch 404 for connection of a terminal circuit; a CI detection circuit 405; a TEL/FAX change-over switch 406 as a CML relay mentioned above; a FAX transmission/reception unit 407 including a modem or the like; and a terminal circuit 408 of a low impedance.

The terminal circuit 408 is constructed by a resistor and a capacitor.

In the construction as mentioned above, when the telephone is used (off hook state), the CPU 400 sets the switch 404 into a disconnecting state. When the telephone is not used (on hook state), the CPU 400 sets the switch 404 into a connecting state.

Further, at the time of power failure (including the power off state), the CPU 400 sets the switch 404 into a disconnecting state. When the power source is changed from the off state to the on state, the CPU 400 first checks the using state of the telephone and subsequently controls the switch 404.

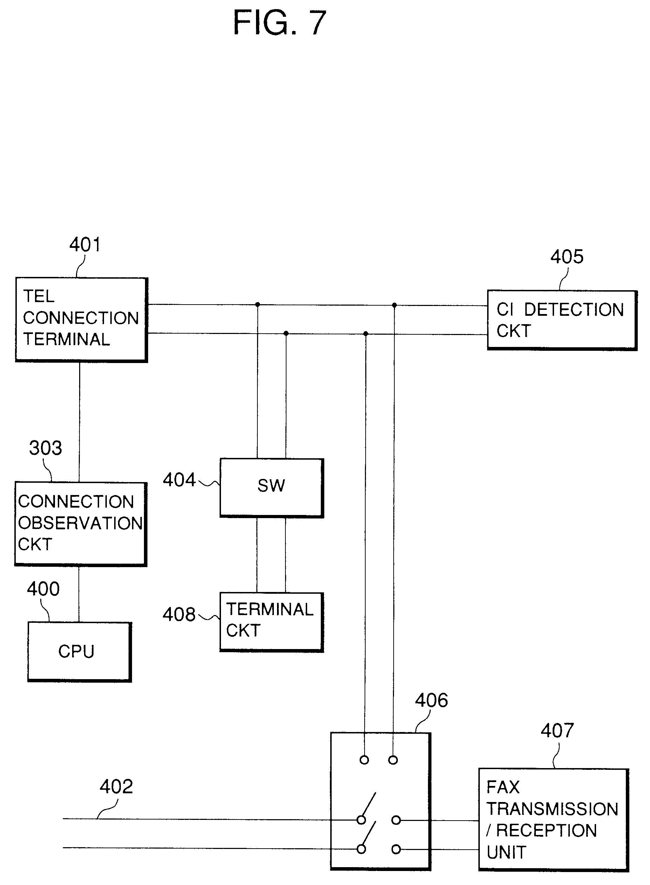

In each of the above embodiments, by detecting the off hook of the telephone, the using state of the telephone is monitored and, when the telephone is used, the CI detection circuit 14 and terminal circuit 408 are disconnected by the H relays 22 and 32 and the switch 404. According to the fourth embodiment in Fig. 7, a connection observation circuit 303 to detect a connecting state of the telephone is provided. In a manner similar to each of the above embodiments, only when the telephone is connected, the switch 404 is set into the disconnecting state. The connection observation circuit 303 detects whether the telephone is connected to the connection terminal 401 or not.

In Fig. 7, when the telephone is connected, the CPU 400 sets the switch 404 into a disconnecting state in correspondence to a CONNECT (connection detection) signal from the connection observation circuit 303.

When the telephone is not connected, the CPU 400 sets the switch 404 into a connecting state in correspondence to the CONNECT signal from the connection observation circuit 303.

At the time of a power failure (including the power off state), further, the CPU 400 sets the switch 404 into a disconnecting state. When the power source is changed from the off state to the on state, the CPU 400 first checks the using state of the telephone and subsequently controls the switch 404.

Since the other remaining constructions of Fig. 7 are common to those in Fig. 6, they are designated by the same reference numerals and their descriptions are omitted here.

In the fourth embodiment, the insertion of the terminal circuit due to the connecting state of the telephone can be also performed mechanically interlockingly with the connection of the telephone to the terminal 401. Namely, when the telephone is not connected, the terminal circuit is inserted. When the telephone is connected, the terminal circuit is disconnected.

By constructing in a manner such that a disconnection circuit 410 of the telephone is added to the third embodiment and the telephone is disconnected in the standby state so as not to ring a bell of the telephone at the time of reception of the CI signal, a ringless call reception can be executed. With this construction, by connecting the terminal circuit simultaneously with the disconnection of the telephone, the ringless call reception can be performed without increasing the impedance of the terminal when it is seen from the line. When the off hook detection circuit 403 detects the off hook, the disconnection circuit 410 connects the telephone.

According to the embodiment as described above, in case of generating a dial pulse call from the telephone connected to the facsimile apparatus, by preventing the occurrence of a waveform distortion when the pulse waveform passes through the inside of the facsimile apparatus and exits to the telephone line, the switchboard doesn't erroneously judge the dial signal. There is an effect such that an erroneous operation or the like can be prevented.

Although the present invention has been described above with respect to the preferred embodiments, the invention is not limited to the foregoing embodiments but many modifications and variations are possible within the spirit and scope of the appended claims of the invention.

A communication apparatus which is connected to a telephone line together with a telephone comprises a connection unit to connect the telephone, a detect unit to detect a connecting state of the telephone, and a connection unit to selectively connect a load such as call signal detector or terminal circuit to the telephone line in accordance with the detection by the detect unit. The detect unit detects an off hook of the telephone or detects whether the telephone is connected to the connection unit or not.

## Claims

1. A communication apparatus comprising:
connecting means (9, 401) for connecting a telephone; and
detecting means (15, 303, 403) for detecting a connecting state of said telephone,
wherein said apparatus further has connecting means (22, 404) for selectively connecting a load (14, 408) to a telephone line in accordance with the detection by said detecting means.

2. An apparatus according to claim 1, wherein said detecting means detects an off hook of said telephone.

3. An apparatus according to claim 1, wherein said detecting means detects whether said telephone has been connected to said connecting means.

4. An apparatus according to claim 1, wherein said load is call signal detecting means.

5. An apparatus according to claim 1, wherein said load is a terminal circuit.

6. An apparatus according to claim 1, further comprising call signal detecting means which is connected to a telephone line irrespective of the switching of the connection of said load by said connecting means.

7. An apparatus according to claim 1, wherein said connecting means further switches the connection of said load in accordance with a state of a power source.

8. An apparatus according to claim 1, further comprising means (410) for disconnecting the telephone.
